Europäisches Patentamt

European Patent Office

Office européen des brevets

(19)

(11) Numéro de publication : **0 345 158 B1**

(12) **FASCICULE DE BREVET EUROPEEN**

(45) Date de publication du fascicule du brevet :
02.09.92 Bulletin 92/36

(51) Int. Cl.⁵ : **B65G 69/18**

(21) Numéro de dépôt : **89401502.3**

(22) Date de dépôt : **01.06.89**

(54) **Dispositif pour l'évacuation des poussières dans les installations de déchargement en vrac.**

(30) Priorité : **01.06.88 FR 887301**

(43) Date de publication de la demande :
**06.12.89 Bulletin 89/49**

(45) Mention de la délivrance du brevet :
**02.09.92 Bulletin 92/36**

(84) Etats contractants désignés :
**AT BE CH DE ES FR GB GR IT LI LU NL SE**

(56) Documents cités :
**DE-B- 1 034 549**
**FR-A- 2 387 180**

(73) Titulaire : **SPIRAGAINE S.A.**
**6, rue Hédouin-Heullant B.P. 10**
**F-76410 Saint-Aubin-Les-Elbeuf (FR)**

(72) Inventeur : **Chefson, Patrice**
**1, rue Petou**
**F-76500 Elbeuf (FR)**

(74) Mandataire : **Wagret, Jean-Michel**
**Wagret Consultants Brevets Marques**
**Modèles 23 rue de Léningrad**
**F-75008 Paris (FR)**

## Description

La présente invention concerne un dispositif de décantation de poussière au sein d'une phase gazeuse évacuée depuis un conteneur subissant une opération de chargement en produit pulvérulent.

L'invention vise à équiper les installations de déchargement en vrac, à partir d'une trémie ou d'un silo, vers un conteneur notamment mobile. Et le dispositif de l'invention vise à éviter les inconvénients connus de telles installations ; notamment le dispositif vise à permettre l'élimination et la récupération, par décantation et filtration, des poussières émises et en suspension dans la phase gazeuse s'échappant du conteneur en cours de remplissage.

On comprend en effet qu'au fur et à mesure du remplissage de l'enceinte du conteneur l'atmosphère intérieure de ce dernier doit être évacuée vers l'extérieur, étant chassée par l'arrivée des produits solides ; or cette atmosphère est précisément chargée fortement en poussière et particules en suspension qui se répandent spontanément dans le milieu ambiant.

On a cherché à remédier à cet inconvénient en associant la gaine principale de déversement, par laquelle transitent les matières en vrac déversées dans le conteneur, à une gaine concentrique extérieure définissant avec la première un espace en forme de couronne cylindrique permettant l'échappement des poussières depuis l'atmosphère du conteneur, cet espace en forme de couronne aboutissant à des moyens de filtration associés à des moyens d'aspiration.

Des installations de ce type connu sont loin de donner satisfaction car elles représentent une structure complexe et coûteuse et difficile à maîtriser dans son fonctionnement ; en effet pour assurer une efficacité fiable à de tels systèmes on est amené à provoquer un appel artificiel de l'atmosphère chargée de particules ce qui provoque un entraînement parasite des produits pulvérulents dispersés et un colmatage rapide des filtres.

L'invention vise à remédier à cet inconvénient et selon un premier objet elle permet d'éliminer toute pénétration dans l'atmosphère ambiante de particules en suspension s'échappant depuis l'atmosphère interne du conteneur en voie de chargement.

Un autre objet de l'invention est de permettre une récupération automatique, simple et fiable des particules du produit pulvérulent, qui sont recyclées et retournent dans le flux principal des matières déversées.

A cet effet l'invention concerne un dispositif d'épuration d'une atmosphère gazeuse en mouvement et équipant une installation de déchargement de produits pulvérulents en vrac, l'installation étant du type constitué d'une gaine souple reliant la base d'un silo ou trémie à l'orifice de remplissage d'un conteneur notamment mobile, le dispositif étant constitué d'un manchon de déversement prolongeant la base de la gaine, ce manchon étant engagé dans l'orifice de remplissage du conteneur et associé à un cône extérieur concentrique au dit manchon et apte à reposer avec autocentrage sur les bords de l'orifice circulaire de remplissage ainsi obturé, le cône étant fermé à son sommet par une paroi horizontale comportant une ouverture d'évacuation. Un tel dispositif est connu du document FR-A-2 387 180. La présente invention est caractérisée en ce que l'espace annulaire défini entre le manchon tubulaire central et le cône extérieur constitue un volume de décantation de la phase gazeuse notamment de l'air chargé de particules solides en suspension et chassé depuis l'atmosphère intérieure du conteneur, ce volume de décantation communiquant avec le volume de l'enceinte en cours de remplissage par un passage annulaire inférieur entre la base du cône extérieur et la base du manchon central et en ce que le volume de décantation comporte intérieurement une pluralité de parois formant chicanes définissant un parcours de l'air chargé, entre le passage inférieur d'entrée et ladite ouverture d'évacuation supérieure, comportant une pluralité de changements de direction, et en ce que le manchon intérieur comporte des ouvertures de communication avec le dit volume de décantation, ces ouvertures coopérant avec lesdites parois formant chicanes pour permettre la reprise des particules décantées au sein du volume et recyclées avec les matières déversées.

Selon une première forme de réalisation, les parois formant chicanes sont disposées en hélice depuis le passage annulaire d'entrée jusque au sommet du volume de décantation, cette paroi hélicoïdale rejoignant de chaque côté la paroi cylindrique du manchon et la paroi du cône extérieur, les ouvertures de reprise disposées sur le manchon étant situées au ras et immédiatement au dessus du raccordement des dites parois hélicoïdales sur le manchon.

Selon une autre caractéristique définissant une variante de l'invention, la où les parois intérieures au volume de décantation définissent un parcours de l'air de section ascencionnelle et croissante en entraînant ainsi un ralentissement dans la vitesse de déplacement de l'air chargé.

Et de préférence, selon une autre caractéristique de l'invention, les parois sont disposées selon une pente par rapport au plan horizontal supérieure à 45°, en évitant ainsi toute stagnation de particules éventuellement déposées.

Selon une forme de réalisation plus particulière le volume intérieur de décantation comporte une première paroi de guidage en forme de collerette tronconique concentrique et rejoignant par son bord intérieur le manchon central, lequel comporte au niveau du raccordement de la collerette une pluralité de passage de reprise des particules solides.

Avantageusement ladite collerette troncônique est associée à des parois de guidage disposées entre ladite collerette et le cône extérieur, ces parois suivant un parcours hélicoïdal.

Selon une variante de réalisation de l'invention, le dispositif de décantation comporte un premier étage constitué par la base du cône extérieur et une collerette inférieure et le dispositif comporte un second étage supérieur de décantation constitué par un cône intérieur et concentrique au cône extérieur et disposé dans la partie supérieure de ce dernier, le cône intérieur rejoignant à son sommet la paroi transversale horizontale refermant le cône extérieur, la base du cône intérieur restant séparée du manchon central pour dégager un passage annulaire de l'air chargé entre l'étage inférieur de décantation et l'étage supérieur de décantation constitué par le volume intérieur de cône intérieur.

Et de préférence la base du cône intérieur est située sensiblement au niveau et dans le même plan du bord supérieur de la collerette inférieure.

Et plus particulièrement le second étage de décantation constitué du cône intérieur comporte une collerette supérieure troncônique, concentrique et rejoignant par son bord intérieur le manchon central, lequel comporte au niveau de ce raccordement une pluralité de passages permettant la reprise des particules décantées depuis ce second volume et collectées par ladite collerette, ces particules rejoignant le flux des matières déversées.

Selon une autre caractéristique, ledit second étage de décantation comporte un déflecteur de forme générale circulaire et de préférence troncônique dont le sommet rejoint la paroi horizontale supérieure refermant le sommet du cône extérieur, ladite paroi horizontale s'arrêtant au niveau du bord supérieur de ce déflecteur pour laisser subsister entre ce bord et la paroi du manchon central un passage annulaire supérieur pour l'évacuation de l'air épuré.

Et de préférence la base de ce déflecteur est située sensiblement au niveau ou légèrement en dessous du plan défini par le bord supérieur de la collerette supérieure interne au cône intérieur.

De préférence encore la base de la gaine de déversement raccordée au manchon central comporte un rétrécissement troncônique de recentrage de la matière formant entonnoir, la base de ce resserrement étant de diamètre inférieur au diamètre du manchon central, en provoquant ainsi un effet de tuyère éloignant les matières déversées depuis les bords du manchon central.

Selon encore une autre caractéristique le sommet du manchon, au dessus de la zone rétrécie, comporte un col cylindrique, extérieur et la paroi supérieure du cône extérieur comporte, autour de l'ouverture annulaire d'évacuation, un second col concentrique au premier, les deux cols coopérant pour former une paroi d'appui réceptrice d'une paroi filtrante formant ceinture et refermant le débouché de l'air partiellement épuré.

D'autres caractéristiques et avantages de l'invention ressortiront de la description qui suit et qui est donnée en rapport avec une forme de réalisation présentée à titre d'exemple non limitatif.

La Figure 1 représente une vue en coupe d'une première forme de réalisation du dispositif de décantation de l'invention.

La Figure 2 représente une vue en perspective de ce dispositif.

La Figure 3 en représente une vue en perspective avec arraché partiel montrant les parois de déflection et de guidage intérieur.

La Figure 4 montre une vue avec arraché d'une seconde forme de réalisation de l'invention.

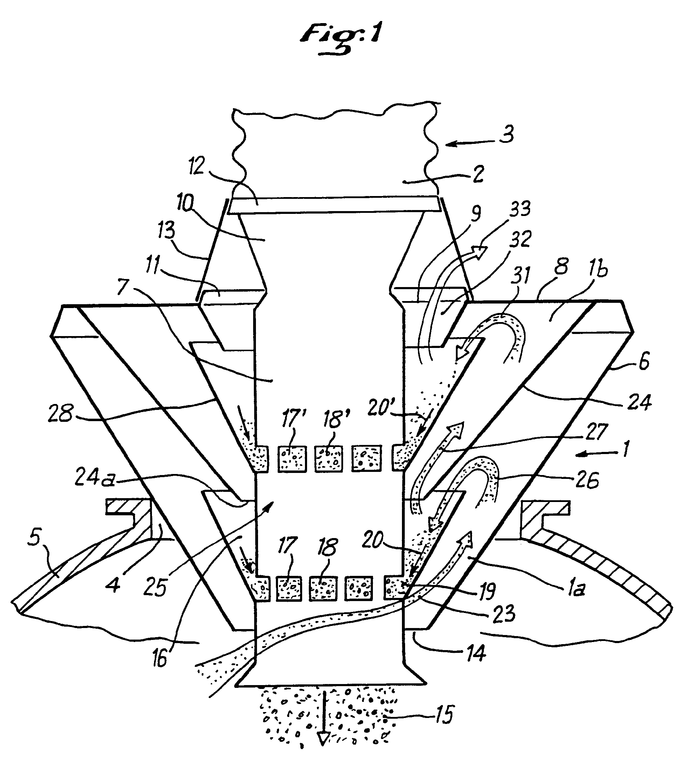

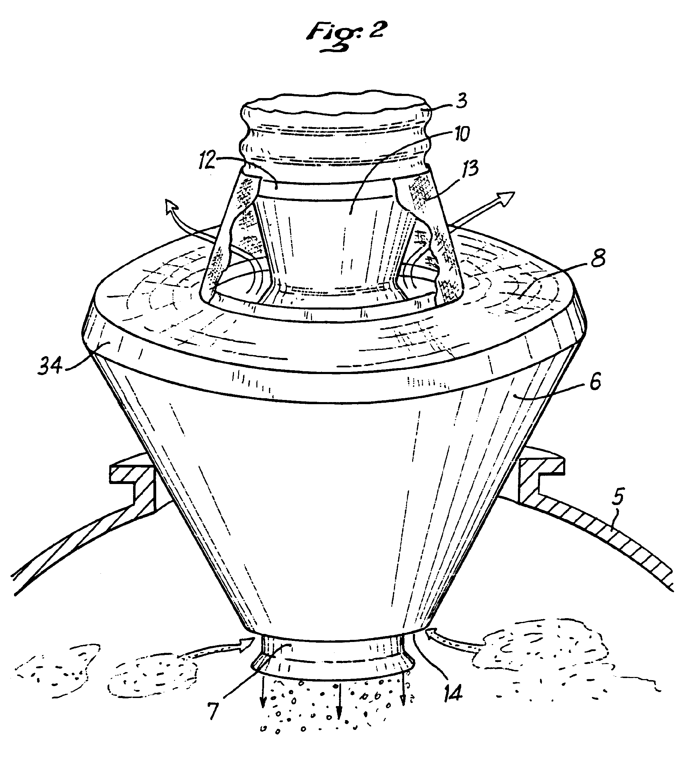

En considérant la première forme de réalisation telle que illustrée aux Figures 1, 2 et 3, on voit que le dispositif est constitué par un ensemble troncônique 1 qui prolonge la base 2 de la gaine 3 et vient s'engager dans le trou d'homme 4 du conteneur 5.

Le dispositif de décantation comporte à l'intérieur du carter ou cône extérieur 6 un manchon central 7 raccordé à l'embase 2 de la gaine ; le cône extérieur 6 étant concentrique au manchon intérieur 7.

Le cône 6 est ouvert à sa base tandis que son plan supérieur est refermé par la paroi horizontale 8 en forme de couronne, cette paroi 8 est interrompue à une certaine distance du manchon concentrique central en laissant ainsi entre cette paroi et le manchon central une zone libre annulaire 9 qui constitue l'ouverture supérieure du cône de décantation 1.

On voit que le cône de décantation peut être ainsi inséré dans le trou d'homme 4 dans lequel il vient se positionner exactement par autocentrage grâce à sa forme troncônique coopérant avec la forme circulaire du trou d'homme 4 constituant l'ouverture de déversement.

Le manchon 7 est raccordé à l'embase 2 de la gaine 3 par une zone ressérée formant entonnoir 10.

Cette zone provoque un effet de recentrage des matières en vrac qui sont déversées depuis la gaine 3 (provenant du silo supérieur de stockage) et les produits sont ainsi conduits à suivre la partie centrale du manchon en épargnant largement les parois.

Ceci va faciliter, comme on l'expliquera ultérieurement, la reprise des solides séparés par sédimentation gravimétrique à l'intérieur du cône de décantation.

Avantageusement on a prévu un rebord 11 au niveau du bord intérieur de la paroi 8 définissant l'ouverture d'évacuation 9.

Et ce rebord 11 coopère avec un rebord formant col 12 disposé au sommet de la partie constituant rétrécissement 10 ; les deux rebords ou cols 11 et 12 disposés concentriquement pouvant constituer une paroi circulaire d'appui pour une feuille filtrante formant ceinture ou écharpe et ainsi interposée entre l'ouverture d'évacuation 9 et l'air libre.

De préférence la base du manchon de déversement 7 se prolonge en dessous de la base du cône 6.

Et l'espace annulaire qui sépare à leur base respective le cône 6 et le manchon intérieur 7 définit un passage annulaire 14 par lequel sont appelées les vapeurs et généralement l'atmosphère intérieure du conteneur 5 chassées par l'arrivée des matières solides en vrac 15.

Ces vapeurs et cette phase gazeuse sont évidemment chargées de poussières et de particules en suspension notamment dans l'air.

Et le cône de décantation permettra selon l'invention entre leur entrée 14 et leur sortie 9 en vue de leur filtration par la paroi 13 une décantation permettant de séparer largement les particules solides qui sont recyclées vers l'intérieur du manchon.

A cet effet, selon l'invention, l'espace intérieur du cône de décantation comporte une succession de parois positionnées de façon à provoquer un parcours allongé avec une succession de variations dans la direction de façon à permettre une séparation des solides et leur appel par des ouvertures de recyclage.

Selon la réalisation des figures 1, 2 et 3, on voit que à la base du manchon 7 est disposée une collerette 16 qui est raccordée à sa base sur le manchon et qui forme une première cuvette de récupération et de sédimentation.

A cet effet, au niveau du raccordement de la collerette 16 sur le manchon sont prévues sur ce dernier les ouvertures 17, 18 qui permettront aux premiers éléments sédimentés 19 de retourner vers l'intérieur du manchon selon la flèche 20.

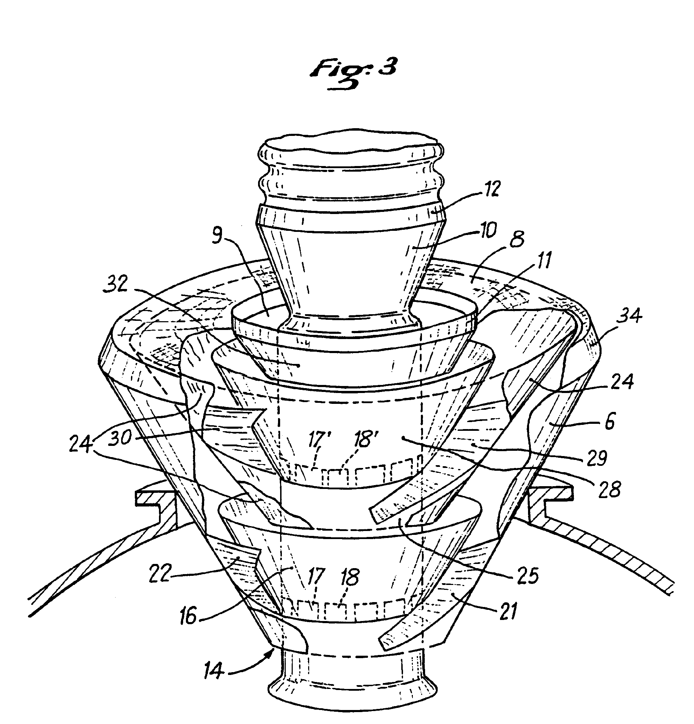

De plus, comme on le voit sur la Figure 3 l'espace annulaire entre la collerette 16 et la paroi du cône 6 comporte des chicanes sous forme de parois disposées en hélice, par exemple au nombre de 3, telles les parois 21 et 22 représentées sur la figure 3.

Ces parois vont ainsi guider les filets d'air chargés en particules selon un parcours ascensionnel qui ne sera pas une ligne droite depuis le passage d'entrée 14 vers le haut mais qui définira un parcours hélicoïdal à l'intérieur de la zone annulaire séparant la collerette 16 de la paroi du cône extérieur 6 ; comme on le voit selon le parcours de la flèche 23 (Figure 1).

Dans l'exemple des figures 1, 2 et 3 la collerette 16 constitue avec la base du cône 6 un premier étage de décantation qui est refermé à son sommet par la paroi du cône intérieur 24, lequel rejoint à son sommet la paroi horizontale supérieure 8 tandis que sa base 24a est maintenue à une certaine distance du manchon intérieur 7 en définissant ainsi un passage annulaire entre l'étage inférieur de décantation et l'étage supérieure constitué par le volume intérieur du cône intérieur 24 et ci-après décrit.

On voit que la décomposition du cône de décantation 1 entre un premier étage constitué par le volume 1a de la base du cône 6 et un second étage 1b constitué par le volume intérieur du cône intérieur 24, détermine un changement à 180° dans la direction des filets gazeux représentés notamment par la flèche 26 ; les filets ascendants selon un parcours hélicoïdal arrivant au niveau du bord supérieur de la collerette 16 doivent en effet replonger vers le bas pour retrouver le passage constitué par l'interstice annulaire 25 précédemment décrit.

Au niveau de ce premier étage les filets, suivant la tête de la flèche 26, suivent alors un parcours non plus ascensionnel mais descendant, ce qui permet dans la cuvette constituée par la collerette 16 une séparation par décantation gravimétrique des particules solides les plus lourdes selon la flèche 20 ; les particules 19 étant appelées par les ouvertures 17, 18 à rejoindre l'espace intérieur du manchon 7.

L'appel des particules est facilité par un effet de "pompe à vide" provenant de l'entraînement et de la chute de la masse solide 15.

La partie supérieure de la cuvette définie par la collerette 16 contient donc un air déjà largement épuré et séparé de ses particules les plus grosses ; cette phase gazeuse poursuit son parcours ascensionnel selon la flèche 27 en pénétrant dans le second étage de décantation.

Ce second étage est défini par le volume intérieur 1b du cône intérieur 24.

Ce volume comporte à son tour une collerette supérieure 28 sensiblement homothétique de la collerette inférieure 16.

Comme dans son parcours au sein de l'étage inférieur de décantation les filets d'air sont appelés à suivre un parcours hélicoïdal du fait des parois en hélice disposées au niveau de l'étage supérieur de décantation, telles les parois 29 et 30.

En suivant ce mouvement ascensionnel, les filets selon la flèche 31 sont bloqués en position haute par la paroi supérieure 8 et ils doivent donc suivre un nouveau virage à 180° pour pénétrer dans l'espace intérieur de la cuvette de décantation supérieure formée de la collerette supérieure 28.

On voit que là encore les filets chargés de particules sont appelés à suivre initialement un parcours descendant et centripète en facilitant le mouvement de séparation des particules entraînées vers le bas et suivant la paroi 28 ; de sorte que les particules à ce second étage supérieur de décantation sont également, selon la flèche 20', appelées à rejoindre les ouvertures 17'- 18' permettant la reprise de ces matières solides décantées vers l'espace intérieur du manchon.

Un déflecteur 32 de forme générale tronçônique coopère avec la collerette 28 de façon à obliger les filets d'air 31 à revenir vers le centre et vers le bas avant de pouvoir s'échapper par l'espace en couronne qui sépare le déflecteur 32 du manchon central 7.

L'espace supérieur de la cuvette formé par la collerette 28 contient donc un air largement épuré qui peut s'échapper par l'espace intérieur au délfecteur 32 vers l'atmosphère.

Avant d'être libéré dans l'atmosphère l'air, selon la flèche 33, doit traverser la paroi filtrante 13 interposée en ceinture périphérique et prenant appui sur les bords 11 et 12 comme précédemment décrit.

De préférence les parois des cuvettes 16 et 28 d'une part comme du cône intérieur 24, ainsi que du cône extérieur 6 forment avec l'horizontale un angle supérieur à 45° de façon à éviter tout dépôt et toute sédimentation de particules sur ces parois.

De plus, l'espace en couronne et intersticiel entre chaque collerette respectivement 16 ou 28, et le cône périphérique qui l'entoure, respectivement 6 et 24, est prévu tel que le volume va s'accroissant vers le haut de façon à permettre une décélération lente et régulière des filets lors de leur parcours ascensionnel hélicoïdal.

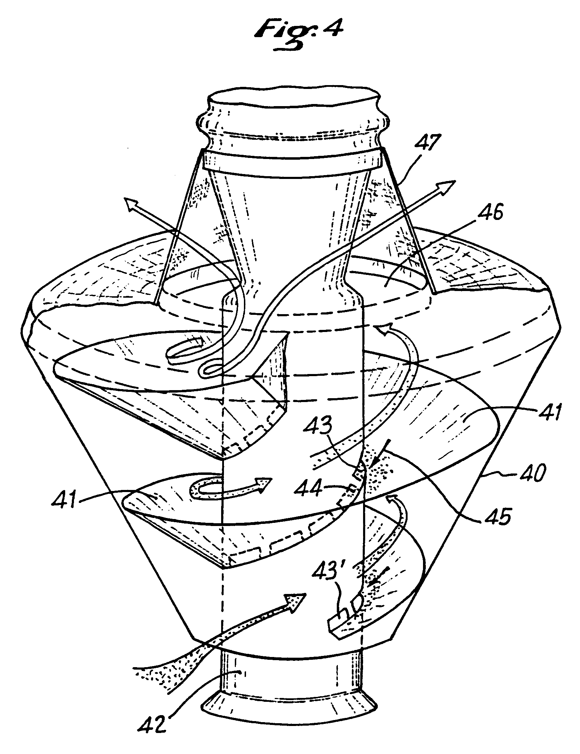

La Figure 4 représente une variante dans laquelle le cône extérieur 40 contient intérieurement une paroi en hélice 41 inclinée depuis la paroi du cône 40 jusque vers le manchon intérieur 42.

Au ras du raccordement de la paroi hélicoïdale 41 sur le manchon central 42 sont prévues une succession de lumières 43, 43′ et 44 qui, comme précédemment, permettent la reprise des particules sédimentées, selon la flèche 45 vers l'espace intérieur du manchon où ces particules rejoignent les solides en cours de déversement.

A la fin de leur parcours hélicoïdal, les filets d'air chargés et largement épurés s'échappent par l'évacuation supérieure en forme de couronne 46 pour traverser la paroi filtrante 47 analogue à la paroi 13.

On voit que l'on réalise dans les deux cas un dispositif particulièrement simple qui vient d'une part obturer exactement l'entrée ou l'orifice de remplissage de la citerne ou du volume récepteur en empêchant ainsi toute évacuation de fumée ou d'air chargé vers l'extérieur.

Cet air chargé doit obligatoirement passer par les passages obligés qui sont disposés à la base du cône. Et entre la sortie supérieure et la base du cône qui constitue l'entrée de l'atmosphère poussiéreuse, sont prévus des dispositifs statiques mais particulièrement efficaces puisque utilisant la force ascensionnelle et la poussée des gaz tendant à s'échapper pour les guider selon des parcours étudiés de façon à opérer une séparation gravimétrique au cours de laquelle les particules sont appelées à rejoindre la phase des solides en cours de déversement.

Et l'air largement épuré peut ainsi traverser la paroi filtrante 13 sans entraîner un colmatage rapide.

Comme on le voit sur les Figures, le cône 6 comporte à sa partie supérieure un rebord biseauté 34 formant un cerclage avantageusement renforcé en un ou plusieurs endroits pour subir l'action d'une masse créant ainsi un choc vibratoire au sein des diverses parois intérieures, ce choc permettant le décollement des particules éventuellement déposées lors de l'opération précédente ; et ces particules sont ainsi conduites à rejoindre par gravité soit l'espace intérieur du manchon (à l'intérieur des collerettes 16 et 28), soit à suivre la paroi intérieure du cône 6 et à rejoindre le volume intérieur du conteneur où les éléments ainsi sédimentés peuvent être récupérés.

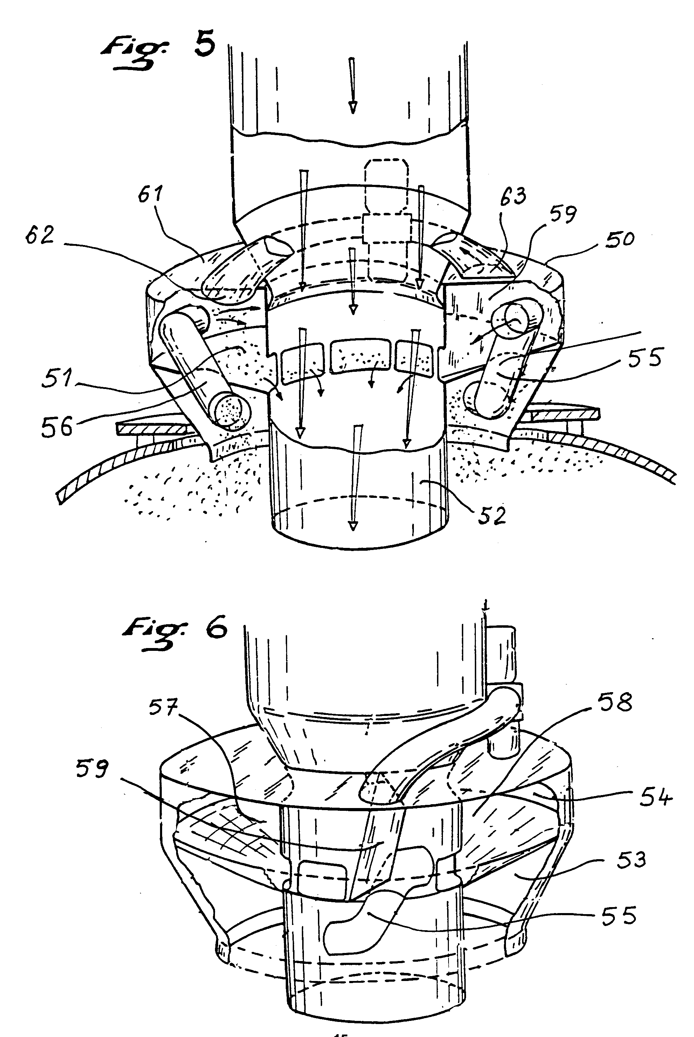

Selon la variante représentée aux figures 5 et 6, le cône comporte intérieurement au moins une paroi annulaire 51, raccordée par sa périphérieau dit cône et par son bord central au dit manchon 52, et cette paroi définit au moins deux chambres superposées selon deux étages de décantation respectivelent 53 et 54, et communiquant entre elles par deux conduits intermédiaires 55, 56 en positions diamétralement opposées, la chambre supérieure 54 étant elle-même divisée en deux capacités 57, 58 chacune en forme de demi-couronne, par deux cloisons verticales et radiales 59, chaque cloison étant disposée immédiatement en arrière du débouché d'un des deux conduits 55, 56, et chaque capacité comporte sur la paroi horizontale supérieure 61 refermant le sommet du cône, une ouverture d'évacuation 62, 63 en position sensiblement diamétralement opposée par rapport au débouché du conduit dans ladite capacité, de sorte que l'air pénétrant dans une des deux capacités de l'étage supérieure parcourt nécessairement un demi-cercle avant de s'échapper vers le sommet, vers un ensemble de filtration et/ou d'aspiration.

## Revendications

1 - Dispositif d'épuration d'une atmosphère gazeuse en mouvement équipant une installation de déchargement de produits pulvérulents en vrac, l'installation étant du type constitué d'une gaine souple (3) reliant la base d'un silo ou trémie à l'orifice de remplissage (4) d'un conteneur notamment mobile (5), le dispositif étant constitué d'un manchon de déversement (7) prolongeant la base de la gaine, ce manchon étant engagé dans l'orifice de remplissage (4) du conteneur et associé à un cône extérieur concentrique (6) au dit manchon et apte à reposer avec autocentrage sur les bords de l'orifice circulaire (4) de remplissage ainsi obturé, le cône étant fermé à son sommet par une paroi horizontale (8) comportant une ouverture d'évacuation (9), caractérisé en ce que l'espace annulaire défini entre le manchon tubulaire central et le cône extérieur constitue un volume de décantation de la phase gazeuse notamment de l'air chargé de particules solides en suspension et chassé depuis l'atmosphère intérieure du conteneur, ce volume de décantation communiquant avec le volume de l'enceinte en cours de remplissage par un passage (14) annulaire inférieur entre la base du cône extérieur (6) et la base du manchon central (7) en ce que ce volume de décantation comporte intérieurement une pluralité de parois formant chicanes définissant un parcours de l'air chargé, entre le passage inférieur d'entrée (14) et ladite ouverture d'évacuation (9) supérieure et comportant une pluralité de changements de direction, et en ce que le manchon intérieur comporte des ouvertures (17, 18) de communication avec ledit volume de décantation, ces ouvertures coopérant avec lesdites parois formant chicanes pour permettre la reprise des particules décantées au sein du volume et recyclées avec les matières déversées.

2 - Dispositif selon la revendication 1, caractérisé en ce que les parois formant chicanes sont disposées en hélice depuis le passage annulaire (14) d'entrée jusque au sommet du volume de décantation, cette paroi hélicoïdale rejoignant de chaque côté la paroi cylindrique du manchon (7) et la paroi du cône extérieur (6), les ouvertures de reprise (17, 18) disposées sur le manchon étant situées au ras et immédiatement au dessus du raccordement des dites parois hélicoïdales sur le manchon.

3 - Dispositif selon la revendication 1, caractérisé en ce que la ou les parois intérieures au volume de décantation définissent un parcours de l'air de section ascensionnelle et croissante en entraînant ainsi un ralentissement dans la vitesse de déplacement de l'air chargé.

4 - Dispositif selon la revendication 1, caractérisé en ce que les parois sont disposées selon une pente par rapport au plan horizontal supérieure à 45°, en évitant ainsi toute stagnation de particules éventuellement déposées.

5 - Dispositif selon la revendication 1, caractérisé en ce que le volume intérieur de décantation comporte une première paroi de guidage en forme de collerette tronconique concentrique (16), et rejoignant par son bord intérieur le manchon central (7), lequel comporte au niveau du raccordement de la collerette une pluralité de passages (17, 18) de reprise des particules solides.

6 - Dispositif selon la revendication 5, caractérisé en ce que ladite collerette tronconique (16) est associée à des parois (21, 22) de guidage disposées entre ladite collerette (16) et le cône extérieur (6), ces parois suivant un parcours hélicoïdal.

7 - Dispositif selon la revendication 1, caractérisé en ce qu'il comporte un premier étage (1a) constitué par la base du cône extérieur (6) et une collerette inférieure (16) et le dispositif comporte un second étage supérieur (16) de décantation constitué par un cône intérieur (24) et concentrique au cône extérieur (6) et disposé dans la partie supérieure de ce dernier, le cône intérieur (24) rejoignant à son sommet la paroi transversale horirontale (8) refermant le cône extérieur (6), la base du cône intérieur (24) restant séparée du manchon central (7) pour dégager un passage annulaire (25) de l'air chargé entre l'étage inférieur (1a) de décantation et l'étage supérieur (16) de décantation constitué par le volume intérieur du cône intérieur (24).

8 - Dispositif selon la revendication 7, caractérisé en ce que la base du cône inférieur (24) est située sensiblement au niveau et dans le même plan du bord supérieur de la collerette inférieure (16).

9 - Dispositif selon la revendication 7, caractérise en ce que le second étage de décantation (1b) constitué du cône intérieur (24) comporte une collerette supérieure tronconique (28), concentrique et rejoignant par son bord intérieur le manchon central (7), lequel comporte au niveau de ce raccordement une pluralité de passages (17', 18') permettant la reprise des particules décantées depuis ce second volume collectées par ladite collerette (28), ces particules rejoignant le flux des matières déversées.

10 - Dispositif selon la revendication 7, caractérisé en ce que ledit second étage (1b) de décantation comporte un déflecteur (32) de forme générale circulaire et de préférence tronconique dont le sommet rejoint la paroi horizontale (8) supérieure refermant le sommet du cône (6) extérieur, ladite paroi horizontale (8) s'arrêtant au niveau du bord supérieur de ce déflecteur (32) pour laisser subsister entre ce bord et la paroi du manchon central (17) un passage annulaire supérieur pour l'évacuation de l'air épuré.

11 - Dispositif selon la revendication 10, caractérisé en ce que la base de ce déflecteur (32) est située sensiblement au niveau ou légèrement en dessous du plan défini par le bord supérieur de la collerette supérieure (28) interne au cône intérieur.

12 - Dispositif selon l'une des revendications 1 à 11, caractérisé en ce que la base de la gaine de déversement (3) raccordée au manchon central (7) comporte un rétrécissement tronconique (10) de recentrage de la matière formant entonnoir, la base de ce resserrement étant de diamètre inférieur au diamètre du manchon central, en provoquant ainsi un effet de tuyère éloignant les matières déversées depuis les bords du manchon central.

13 - Dispositif selon l'une des revendications 1 à 12, caractérisé en ce que le sommet du manchon (7), au dessus de la zone rétrécie (10), comporte un col cylindrique (12), et la paroi supérieure du cône extérieur (6) comporte, autour de l'ouverture annulaire d'évacuation (9), un selon col (11) concentrique au premier, les deux cols coopérant ainsi pour former une paroi d'appui réceptrice d'une surface filtrante (13) formant ceinture et refermant le débouché de l'air partiellement épuré.

14 - Dispositif d'épuration selon la revendication 1, caractérisé en ce que le cône (50) comporte intérieurement au moins une paroi annulaire (51) raccordée par sa périphérie au dit cône et par son bord central au dit manchon (52), et en ce que cette paroi définit au moins deux chambres superposées selon deux étages de décantation (respectivement 53 et 54, et communiquant entre elles par deux conduits intermédiaires (55, 56) en positions diamétralement opposées, la chambre supérieure 54 étant elle-même divisée en deux capacités (57, 58) chacune en forme de demi-couronne, par deux cloisons verticales et radiales (59), chaque cloison étant disposée immédiatement en arrière du débouché d'un des deux conduits (56, 56) et chaque capacité comportant sur la paroi horizontale supérieure (61) refermant le sommet du cône, une ouverture d'évacuation (62, 63) en position sensiblement diamétralement opposée par rapport au débouché du conduit dans ladite capacité, de sorte que l'air pénétrant dans une des deux capacités de l'étage supérieur parcourt nécessairement un demi-cercle avant de s'échapper vers le sommet, vers un ensemble de filtration et/ou d'aspiration.

**Patentansprüche**

1. Vorrichtung zur Reinigung eines Luftstroms bei einer Entladevorrichtung für pulverförmiges Schüttgut, im wesentlichen bestehend aus einem nachgiebigen Einfüllschacht (3), der an die Basis eines Speichers oder Trichters an die Einfüllöffnung (4) eines insbesondere beweglichen Behälters (5) anschließt, und die Vorrichtung einen Stutzen (7), als untere Verlängerung des Schachts aufweist, wobei der Stutzen in die Einlaßöffnung (4) des Behälters führt und mit einem außenliegenden konzentrischen Konus (6) verbunden ist, und durch Selbstzentrierung auf den Rändern der dadurch verschlossenen kreisförmigen Einlaßöffnung (4) aufsitzt, und der Konus an seiner Stirnfläche durch eine horizontale, mit einer Auslaßöffnung (9) versehenen Wand (8) abgeschlossen ist, dadurch gekennzeichnet, daß der durch den rohrförmigen zentralen Stutzen und dem äußeren Konus definierte ringförmige Zwischenraum einen Klärraum für die Gase, nämlich der mit Staubpartikel versehenen und von der inneren Atmosphäre des Behälters stammenden Luft, bildet, wobei der Klärraum mit dem Raum des sich füllenden, umgebenden Mantels durch eine ringförmige untere Einlaßöffnung (14) zwischen der unteren Basis des außenliegenden Konus (6) und der Basis des zentralen Stutzens (7) in Verbindung steht; und daß dieser Klärraum innen eine Vielzahl von Wänden aufweist, die für die beladene einströmende Luft zwischen der unteren Einlaßöffnung (14) und der oberen Auslaßöffnung (9) Schikanen bilden, wodurch eine Vielzahl von Richtungsänderungen hervorgerufen wird; und daß der innere Stutzen mit dem Klärraum in Verbindung stehende Öffnungen (17, 18) aufweist, welche mit den Schikane bildenden Wänden zusammenwirkt, um die abgeschiedenen Partikel im Inneren des Klärraums zurückzuhalten und um zusammen mit der ausströmenden Luft wiederverwertet zu werden.

2. Vorrichtung nach Anspruch 1, dadurch gekennzeichnet, daß die Schikane bildenden Wände wendelförmig ab der ringförmigen Einlaßöffnung (14) bis zum oberen Ende des Klärraums angeordnet sind, wobei die wendelförmige Wand an jeder Seite mit der zylindrischen Wand des Stutzens (7) und der Wand des äußeren Konus (6) in Verbindung steht und die Öffnungen (17, 18) auf dem Konus unmittelbar oberhalb der Verbindung der wendelförmigen Wände auf dem Stutzen angebracht sind.

3. Vorrichtung nach Anspruch 1, dadurch gekennzeichnet, daß die innerhalb des Klärraums gelegene Wand oder Wände einen Abschnitt bilden, in dem die Luft aufsteigt und sich sammelt, was eine Verringerung der Geschwindigkeit der einströmenden Luft bewirkt.

4. Vorrichtung nach Anspruch 1, dadurch gekennzeichnet, daß die Wände einen Winkel von über 45° zu der horizontalen oberen Ebene bilden, um eine Ablagerung von eventuell sich absetzenden Partikeln zu vermeiden.

5. Vorrichtung nach Anspruch 1, dadurch gekennzeichnet, daß der innere Klärraum eine erste Leitwand in Form eines kegelstumpfförmigen konzentrischen Flansches (16) aufweist, und an seinem inneren Rand mit dem zentralen Stutzen (7) in Verbindung steht, welcher in Höhe der Verbindung mit dem Flansch eine Vielzahl von Öffnungen (17, 18) für feste Partikel aufweist.

6. Vorrichtung nach Anspruch 5, dadurch gekennzeichnet, daß der kegelstumpfförmige Flansch (16) mit den sich zwischen diesem (16) und dem äußeren Konus (6) befindenden Leitwänden (21, 22) verbunden ist, welche einen wendelförmigen Durchlaß bilden.

7. Vorrichtung nach Anspruch 1, dadurch gekennzeichnet, daß sie eine erste durch die Basis des äußeren Konus und einen unterhalb gelegenen Flansch (16) gebildete Stufe (1a) aufweist, und daß sie eine zweite, konzentrisch zum äußeren Konus (6) liegende und im oberen Teil desselben angebrachte Stufe (1b) aufweist, wobei der innere Kegel (24) an seinem oberen Teil mit der querliegenden horizontalen, den Kegel abschließenden Wand (8) in Verbindung steht, und die Basis des inneren Kegels (24) von dem zentralen Stutzen (7) getrennt bleibt, um einen ringförmigen Durchgang (25) für die einströmende Luft zwischen der unteren Klär-Stufe (1a) und der oberen aus dem inneren Volumen des inneren Kegels (24) gebildeten Klär-Stufe (1b) freizulassen.

8. Vorrichtung nach Anspruch 7, dadurch gekennzeichnet, daß die Basis des inneren Konus (24) in der Höhe der Ebene des oberen Randes des unteren Flansches (16) liegt.

9. Vorrichtung nach Anspruch 7, dadurch gekennzeichnet, daß die zweite aus dem inneren Konus (24) gebildete Klär-Stufe (1b) einen oberen kegelstumpfförmigen, konzentrischen und durch den inneren Rand mit dem zentralen Stutzen (7) in Verbindung stehenden Flansch (28) aufweist, welcher in Höhe dieser Verbindung eine Vielzahl von Öffnungen (17', 18') aufweist, welche die von dem zweiten Raum stammenden und durch den Flansch (28) aufgefangenen abgeschiedenen Partikel aufnehmen, welche mit der ausströmenden Luft abfließen.

10. Vorrichtung nach Anspruch 7, dadurch gekennzeichnet, daß die zweite Klär-Stufe (1b) eine generell kreisförmige und vorzugsweise kegelstumpfförmige Ablenkvorrichtung (32) aufweist, deren Spitze mit der horizontalen oberen, die Spitze des äußeren Konus (6) abschließenden Stirnwand (8) in Verbindung steht, wobei diese horizontale Wand (8) bis zum oberen Rand der Ablenkvorrichtung (32) reicht, um zwischen diesem Rand und der Wand des inneren Stutzens (17) einen ringförmigen oberen Durchgang für das Ausströmen der gereinigten Luft freizulassen.

11. Vorrichtung nach Anspruch 10, dadurch gekennzeichnet, daß die Basis der Ablenkvorrichtung (32) an die Ebene oder leicht unterhalb des oberen Rands des oberen Flansches (28) innerhalb des inneren Konus angepaßt ist.

12. Vorrichtung nach einem der Ansprüche 1 bis 11, dadurch gekennzeichnet, daß die Basis des sich an den zentralen Stutzen anschließenden Entladeschachts (3) eine kegelstumpfförmige, einen Trichter bildende Verengung (10) zum Auffangen der Stoffe aufweist, wobei die Basis dieser Verengung kleiner ist als der Durchmesser des zentralen Stutzens (7), und somit einen Düseneffekt bewirkt, der die ausströmenden Stoffe von den Rändern des zentralen Stutzens entfernt.

13. Vorrichtung zum Reinigen nach einem der Ansprüche 1 bis 12, dadurch gekennzeichnet, daß der obere Teil des Stutzens (7) oberhalb der verengten Zone (10) einen zylindrischen Kragen (12) aufweist, und die obere Wand des äußeren Konus (6) rund um die kreisförmige Auslaßöffnung (9) einen entsprechenden Kragen, konzentrisch zum ersten, aufweist, wobei die zwei Kragen dermaßen zusammenwirken, um eine sich verengende Stützwand mit filtrierender Oberfläche (13) zu bilden, die einen Gürtel bildet und die Einmündung der teilweise gereinigten Luft abschließt.

14. Vorrichtung zur Reinigung nach Anspruch 1, dadurch gekennzeichnet, daß der Konus (50) innen mindestens eine ringförmige Wand (51) aufweist, die an ihrer Außenseite an den Konus anschließt, und daß diese Wand mindestens zwei übereinanderliegende, nach den beiden klär-Stufen (nämlich 53 und 54) ausgerichtete Kammern definiert, die miteinander durch zwei diametral gegenüberliegende Verbindungsgänge (55, 56) verbunden werden, und die obere Stufe (54) selbst durch vertikale und radiale Trennwände (59) in zwei halbkreisförmige Räume (57, 58) unterteilt ist, wobei jede Trennwand unmittelbar hinter der Mündung der beiden Gänge (55, 56) angebracht ist, und jeder Raum auf der horizontalen oberen, diametral ausgerichteten, die Spitze des Kegels abschließenden Wand (61) eine Abflußöffnung (62, 63) aufweist, die diametral gegenüber der Mündung der Verbindung in dem Raum dermaßen angebracht ist, daß die in eine der beiden Räume der oberen Ebene einströmende Luft gezwungenermaßen einen Halbkreis ausführt, bevor sie an der Spitze in Richtung einer Filter- und/oder Saugvorrichtung austritt.

## Claims

1. Device for purifying a gaseous atmosphere in movement equipping an installation for unloading pulverulent products in bulk, the installation being of the type constituted by a supple sheath (3) connecting the base of a silo or hopper to the filling orifice (4) of a container (5), particularly a mobile one, the device being constituted by a pouring sleeve (7) extending the base of the sheath, this sleeve being engaged in the filling orifice (4) of the container and associated with an outer cone (6) concentric to said sleeve and adapted to rest with self-centering on the edges of the circular filling orifice (4) thus obturated, the cone being closed at its apex by a horizontal wall (8) comprising an evacuation opening (9), characterized in that the annular space defined between the central tubular sleeve and the outer cone constitutes a volume for decantation of the gaseous phase particularly of the air laden with solid particles in suspension and driven from the inner atmosphere of the container, this decantation volume communicating with the volume of the enclosure in the course of filling by a lower annular passage (14) between the base of the outer cone (6) and the base of the central sleeve (7); in that the decantation volume internally comprises a plurality of walls forming baffles defining a path for the laden air between the lower inlet passage (14) and said upper evacuation opening (9) and comprising a plurality of changes of direction, and in that the inner sleeve comprises openings (17, 18) for communication with said decantation volume, these openings cooperating with said walls forming baffles to allow take-up of the particles decanted within the volume and recycled with the poured materials.

2. Device according to Claim 1, characterized in that the walls forming baffles are disposed helically from the annular inlet passage (14) up to the apex of the decantation volume, this helicoidal wall joining on each side the cylindrical wall of the sleeve (7) and the wall of the outer cone (6), the take-up openings (17, 18) disposed on the sleeve being located level with and immediately above the connection of said helicoidal walls on the sleeve.

3. Device according to Claim 1, characterized in that the inner wall or walls of the decantation volume define a path for the air of increasing ascensional section, thus bringing about a reduction in speed of displacement of the laden air.

4. Device according to Claim 1, characterized in that the walls are disposed at an inclination with respect to the horizontal plane greater than 45°, thus avoiding any stagnation of particles possibly deposited.

5. Device according to Claim 1, characterized in that the inner decantation volume comprises a first guiding wall in the form of a concentric truncated flange (16), and joining by its inner edge the central sleeve (7), which comprises, at the level of the connection of the flange, a plurality of passages (17, 18) for take-up of the solid particles.

6. Device according to Claim 5, characterized in that said truncated flange (16) is associated with guiding walls (21, 22) disposed between said flange (16) and the outer cone (6), these walls following a helicoidal path.

7. Device according to Claim 1, characterized in that it comprises a first stage (la) constituted by the base of the outer cone (6) and a lower flange (16) and the device comprises a second upper decantation stage (16) constituted by an inner cone (24) concentric to the outer cone (6) and disposed in the upper part of the latter, the inner cone (24) joining at its apex the horizontal transverse wall (8) closing the outer cone (6), the base of the inner cone (24) remaining separated from the central sleeve (7) in order to clear an annular passage (25) for the laden air between the lower decantation stage (1a) and the upper decantation stage (16) constituted by the inner volume of the inner cone (24).

8. Device according to Claim 7, characterized in that the base of the lower cone (24) is located substantially at the level of and in the same plane as the upper edge of the lower flange (16).

9. Device according to Claim 7, characterized in that the second decantation stage (1b) constituted by the inner cone (24) comprises a truncated upper flange (28), concentric and joining by its inner edge the central sleeve (7), which comprises at the level of this connection a plurality of passages (17′, 18′) allowing take-up of the particles decanted from this second volume collected by said flange (28), these particles joining the flow of poured materials.

10. Device according to Claim 7, characterized in that said second decantation stage (1b) comprises a deflector (32) of generally circular and preferably truncated form whose apex joins the upper horizontal wall (8) closing the apex of the outer cone (6), said horizontal wall (8) stopping at the level of the upper edge of this deflector (32) to leave between this edge and the wall of the central sleeve (17) an upper annular passage for the evacuation of the purified air.

11. Device according to Claim 10,
characterized in that the base of this deflector (32) is located substantially at the level of or slightly below the plane defined by the upper edge of the upper flange (28) inside the inner cone.

12. Device according to one of Claims 1 to 11,
characterized in that the base of the pouring sheath (3) connected to the central sleeve (7) comprises a truncated narrowing (10) for recentering the material, forming funnel, the base of this narrowing being of diameter smaller than the diameter of the central sleeve, thus causing a nozzle effect separating the materials poured from the edges of the central sleeve.

13. Device according to one of Claims 1 to 12,
characterized in that the apex of the sleeve (7), above the narrowed zone (10), comprises a cylindrical neck (12) and the upper wall of the outer cone (6) comprises, around the annular evacuation opening (9), an according (sic.) neck (11) concentric to the first, the two necks thus cooperating to form a bearing wall receiving a filtering surface (13) forming belt and closing the opening of the partially purified air.

14. Purification device according to Claim 1,
characterized in that the cone (50) internally comprises at least one annular wall (51) connected by its periphery to said cone and by its central edge to said sleeve (52), and in that this wall defines at least two superposed chambers in two decantation stages (53 and 54 respectively), and communicating with each other by two intermediate conduits (55, 56) in diametrally opposite positions, the upper chamber 54 itself being divided into two volumes (57, 58) each in the form of a half-crown, by two vertical, radial partitions (59), each partition being disposed immediately to the rear of the opening of one of the two conduits (56, 56) and each volume comprising on the upper horizontal wall (61) closing the apex of the cone, an evacuation opening (62, 63) in position substantially diametrally opposite with respect to the opening of the conduit in said volume, so that the air penetrating in one of the two volumes of the upper stage necessarily covers a semi-circle before escaping towards the apex, towards a filtration and/or suction assembly.

## Fig:1

*Fig. 2*

Fig. 3

Fig. 4

Fig. 5

Fig. 6